# EUROPÄISCHE PATENTSCHRIFT

(11) **EP 1 852 336 B1**
(45) Veröffentlichungstag und Bekanntmachung des Hinweises auf die Patenterteilung: **07.01.2009**
(21) Anmeldenummer: 07008481.9
(22) Anmeldetag: 26.04.2007
(51) Int. Cl.: B62D 33/02

(54) **Runge für Fahrzeugaufbauten**
Post for vehicle superstructures
Ranche pour constructions automobiles

(30) Priorität: 06.05.2006 DE 102006021231
(43) Veröffentlichungstag der Anmeldung: 07.11.2007
(60) Teilanmeldung: 08008015.3
(73) Patentinhaber: F. HESTERBERG & SÖHNE GmbH & Co. KG, 58256 Ennepetal (DE)
(72) Erfinder: Tiedtke, Henning, 58256 Ennepetal (DE); Feinbier, Joachim, 58256 Ennepetal (DE)
(74) Vertreter: Christophersen & Partner

(56) Entgegenhaltungen:
- WO-A-01/51339
- WO-A-98/24679
- DE-U1- 20 000 002
- DE-U1- 29 616 344

## Beschreibung

Die Erfindung betrifft eine Runge für Fahrzeugaufbauten mit einer zum Festlegen der Runge an einem fahrzeugfesten Rungenhalter streckbaren Kniehebelanordnung, die sich zusammensetzt aus einem ersten Hebelarm, der schwenkbeweglich gegen den Rungenhalter abgestützt ist, und einem zweiten Hebelarm, der über ein Kniehebelgelenk mit dem ersten Hebelarm verbunden ist und über eine Gelenkachse an einer vertikalen Profilstange der Runge angelenkt ist.

Das Festlegen von Rungen an z.B. über eine Plane geschlossenen Nutzfahrzeug-Aufbauten erfolgt über fahrzeugfeste Rungenhalter, die im unteren Endbereich der Runge an einem fahrzeugfesten Träger etwas unterhalb der Ladefläche festgelegt sind. Die Verriegelung der Runge an dem Rungenhalter erfolgt von Hand durch Streckung einer an der Runge vorgesehenen Kniehebelanordnung aus zwei gelenkverbundenen Hebelarmen, von denen üblicherweise ein Hebelarm mit einem Betätigungshebel versehen ist, der den zum Strecken der Kniehebelanordnung erforderlichen Kraftaufwand verringert.

Aus der EP 0 941 195 B1 ist eine gattungsbildende Runge bekannt, bei der der erste Hebelarm der Kniehebelanordnung über ein zylindrisches Abstützelement gegen die Oberseite des Rungenhalters abgestützt ist. Ein zweiter Hebelarm ist an seinem einen Ende über ein Kniehebelgelenk mit dem ersten Hebelarm verbunden und im Bereich seines anderen Endes an einer Profilstange der Runge angelenkt. Der erste Hebelarm ist über das Kniehebelgelenk hinaus zu einem Betätigungshebel verlängert, durch dessen Betätigung die Kniehebelanordnung in eine gestreckte Stellung verschwenkt wird. Während der Betätigung wird die Kniehebelanordnung von einer abgewinkelten Ausgangsstellung bis über die sog. Totpunktlage, in der die beiden Hebelarme einen Winkel von 180° einschließen, hinaus überstreckt, wobei die Runge angehoben und mit ihrem unteren Ende an dem Rungenhalter verriegelt wird. Beide Hebelarme werden von oben her mit den Gewicht des Fahrzeugaufbaus beaufschlagt. Die Übertotpunktlage wirkt im Fahrbetrieb einem ungewollten Rückschwenken des Kniehebels in dessen abgewinkelte Stellung entgegen. Das Kniehebelgelenk wird aufgrund der Überstreckung der Kniehebelanordnung durch die Vertikalkraft auch in Richtung des Fahrzeugaufbaus gedrückt. Als nachteilig bei dieser Runge hat sich erwiesen, dass die Kniehebelanordnung im Fall extremer Fahrsituationen nicht in jedem Fall gegen ein ungewolltes Rückschwenken gesichert ist. Bereits im normalen Fahrbetrieb ist der Fahrzeugaufbau, z.B. bei Kurvenfahrt, teilweise erheblichen Kräften ausgesetzt. Bei besonders großen Kräften und Wechselbelastungen kann es zum Verbiegen der Rungen kommen, wobei sich die die Kniehebelanordnung sichernde Überstreckung lösen kann. Dabei besteht die Gefahr, dass die Kniehebelanordnung in ihre abgewinkelte Ausgangslage zurückschwenkt und während der Fahrt die Verriegelung zwischen Runge und Rungenhalter gelöst wird. Darüber hinaus hat es sich bei dieser Runge als für deren Betriebssicherheit von Nachteil erwiesen, dass sowohl beide Hebelarme als auch die zugehörigen Gelenke den im Fahrbetrieb teilweise erheblichen dynamischen Kräften ausgesetzt sind, was zu Beeinträchtigungen der Funktionsweise der Runge bis hin zu Materialversagen der kraftbelasteten Bauteile führen kann.

Aus der EP 0 831 001 A1 ist eine Runge mit einer streckbaren Kniehebelanordnung bekannt, deren erster Hebelarm an einem in Längsrichtung der Runge verschiebbaren Riegel schwenkbeweglich angelenkt und über diesen gegen den Rungenhalter abgestützt ist. Über ein Kniehebelgelenk ist der erste Hebelarm mit einem zweiten Hebelarm schwenkbeweglich gekoppelt, dessen anderes Ende über ein Gelenk an der Profilstange der Runge angelenkt ist. Der zweite Hebelarm ist über das Kniehebelgelenk hinaus einstückig zu einem Betätigungshebel mit einem an dessen Ende angeordneten Griffteil verlängert. Bei Betätigung des Betätigungshebels wird die zunächst abgewinkelte Kniehebelanordnung gestreckt, bis sich der an dem ersten Hebelarm angeordnete Riegel von oben her gegen den fahrzeugfesten Rungenhalter legt. Während der Betätigung wird die Kniehebelanordnung von einer abgewinkelten Ausgangsstellung bis über die Totpunktlage hinaus überstreckt. Die Überstreckung der Kniehebelanordnung wirkt im Fahrbetrieb einem ungewollten Rückschwenken des Kniehebels in dessen abgewinkelte Stellung entgegen. Als zusätzliche Sicherung ist ein Federblech vorgesehen, welches das Kniehebelgelenk kraftschlüssig an der Profilstange der Runge sichert. Diese kraftschlüssige Sicherung des Kniehebelgelenks hat sich aufgrund der vergleichsweise geringen und insoweit leicht zu überwindenden Haltekraft des Federblechs als wenig hilfreich erwiesen, auch bei Wechselbelastungen eine ausreichende Sicherung zu bieten.

Aus der EP 1 517 824 B1 ist eine Runge mit einer Kniehebelanordnung bekannt, deren beide Hebelarme sowie die zugehörigen Gelenke bei gestreckter Kniehebelanordnung frei von Belastungen sind. Die Kräfte werden bei gestreckter Kniehebelanordnung über ein Stützelement, das an einem der Hebelarme vorgesehen ist, im Zusammenspiel mit einem am Profil der Runge vorgesehenen Gegenlager übertragen. Als für die Betriebssicherheit dieser Runge nachteilig hat sich erwiesen, dass beide Gelenke der Kniehebelanordnung außerhalb des Kraftflusses liegen und insoweit ungeeignet für eine Übertotpunktsicherung sind.

Es ist die **Aufgabe** der Erfindung, die Betriebssicherheit bekannter Rungen zu verbessern.

Zur **Lösung** dieser Aufgabe wird bei einer Runge der eingangs genannten Art vorgeschlagen, dass das Kniehebelgelenk der gestreckten Kniehebelanordnung über einen Formschluss an der Profilstange gegen Rückschwenken gesichert ist.

Die formschlüssige Sicherung des Kniehebelgelenks in der Endstellung der Kniehebelanordnung verbessert die Betriebssicherheit der Runge. Der Formschluss hält den im Fahrbetrieb auftretenden Kräften auch bei starken Biegungen und Wechselbelastungen der Runge stand. Die Gefahr eines unbeabsichtigten Entsperrens der Runge bzw. der Kniehebelanordnung wird deutlich reduziert.

Eine vorteilhafte Ausführung sieht zur Verbesserung der Betriebssicherheit vor, dass sich die Profilstange von oben her gegen das Kniehebelgelenk der überstreckten Kniehebelanordnung abgestützt, wobei der zweite Hebelarm keine Abstützkräfte überträgt. Hierdurch reduziert sich die Zahl der insgesamt im Kraftfluss liegenden Bauteile. Durch die geringere Anzahl im Fahrbetrieb dynamisch belasteter Bauteile bei gleichzeitiger Übertotpunktsicherung ergibt sich eine bessere Betriebssicherheit der Runge. Die Gefahr von z.B. Materialbrüchen oder Gelenkverschleiß wird reduziert.

Die lösungsgemäßen Maßnahmen zur Verbesserung der Betriebssicherheit lassen sich erfingdungsgemäß kombinieren.

Eine für den Bedienkomfort der Runge vorteilhafte Ausgestaltung sieht vor, dass zur Bildung des Formschlusses ein gemeinsam mit dem Kniehebelgelenk verschwenkbares Formschlusselement der Kniehebelanordnung mit einem an der Profilstange angeordneten Formschlusselement in Eingriff bringbar ist. Durch Verwendung zweier Formschlusselemente, von denen das eine bei Betätigung der Kniehebelanordnung gegenüber dem anderen verschwenkt, erfolgt die Bereitstellung des Formschlusses selbsttätig bei Betätigung der Kniehebelanordnung.

In diesem Zusammenhang ist es von Vorteil, wenn eines der Formschlusselemente eine drehbar gelagerte Hülse ist, wodurch sich die Reibkräfte beim Ineingriffbringen der beiden Formschlusselemente durch die Drehbewegungen der Hülse reduzieren, so dass die Formschlusselemente einem geringen Verschleiß unterliegen.

Gemäß einer weiteren Ausgestaltung kann eine selbsttätige, bedienerfreundliche Bereitstellung des Formschlusses dadurch erfolgen, dass der Formschluss von einem das Kniehebelgelenk hintergreifenden Sicherungsstift gebildet wird.

Von Vorteil für eine einfache Bauweise der Runge ist ferner eine Ausgestaltung mit einem Längenausgleichselement, über welches der Abstand der Gelenkachse gegenüber der Achse des Kniehebelgelenks veränderbar ist. Diese Abstandsänderung ermöglicht die formschlüssige Verriegelung des Kniehebelgelenks während der Betätigung bzw. beim Strecken der Kniehebelanordnung mit konstruktiv einfachen Mitteln.

Für eine einfache Bauweise der Runge ist es in diesem Zusammenhang ferner von Vorteil, wenn das Längenausgleichselement ein Langloch im Bereich der Gelenkachse und/oder der Achse des Kniehebelgelenks ist.

Eine den Bedienkomfort der Runge verbessernde und die Runge gleichsam gegen ungewolltes Rückschwenken der Kniehebelanordnung sichernde Ausgestaltung sieht vor, dass ein Hebelarm mit einem Betätigungshebel zum Strecken der Kniehebelanordnung versehen ist, der den Hebelarm über das Kniehebelgelenk hinaus verlängert, wobei der Betätigungshebel zur Sicherung der gestreckten Kniehebelanordnung mit einem Rastelement an der Runge oder dem Rungenhalter verriegelbar ist. Der Betätigungshebel schafft günstige Hebelverhältnisse, die eine kraftsparende Betätigung erlauben. Durch das am Betätigungshebel vorgesehene Rastelement zur Verriegelung des Betätigungshebels wird die gestreckte Kniehebelanordnung sicher in der gestreckten Position gehalten. Selbst bei starken Verformungen und Ausfall anderer Sicherheitsmechanismen des Fahrzeugaufbaus ist ein Lösen der Verriegelung zwischen Runge und Rungenhalter unwahrscheinlich.

Von Vorteil ist eine Ausgestaltung, bei der der erste Hebelarm mit dem Betätigungshebel versehen ist. Der erste Hebelarm stützt sich von oben her gegen den Rungenhalter ab. Ein an diesem Hebelarm vorgesehener Betätigungshebel kann nahezu beliebig weit über das Kniehebelgelenk hinaus nach oben verlängert werden, weshalb sich neben einer günstigen, da kraftschonenden Betätigung auch viele mögliche Anbringpositionen für das Rastelement bzw. eine mit dem Rastelement zusammenwirkende Gegenrast ergeben.

Eine selbsttätige und damit bedienerfreundliche Verrastung des Betätigungshebels wird gemäß einer weiteren Ausgestaltung dadurch erreicht, dass das Rastelement entgegen der Kraft einer Feder in Längsrichtung des Betätigungshebels beweglich ist. Bei Betätigung kann das Rastelement zunächst in Richtung des Betätigungshebels ausweichen, wonach es anschließend z.B. im Zusammenspiel mit einer Gegenrast wieder zurückfedern und auf diese Weise einen Formschluss bereitstellen kann, der erst durch Betätigung des Rastelements wieder von Hand gelöst werden kann.

Von besonderen Vorteil ist eine Ausgestaltung, wonach die gestreckte Kniehebelanordnung eine Überstreckung aufweist. Durch die Überstreckung wird die Betriebssicherheit der Runge nach Art einer Übertotpunktsicherung verbessert, da die Kniehebelanordnung nicht dazu neigt, nach außen hin wegzuknicken.

Weitere Vorteile und Einzelheiten der erfindungsgemäßen Runge werden nachfolgend unter Zuhilfenahme der beigefügten Zeichnungen erläutert, in denen
- Fig. 1: eine Seitenansicht eines Fahrzeugs mit einem mit mehreren Rungen versehenen Fahrzeug-Planenaufbau,
- Fig. 2 a - 2 c: verschiedene Ansichten einer ersten Ausführung einer erfindungsgemäßen Runge,
- Fig. 3: eine vergrößere und schematisierte Darstellung der in den Fig. 2 b und 2 c dargestellten Runge,
- Fig. 4: eine zweite Ausführung einer erfindungsgemäßen Runge bei teilweise abgewinkelter und gestreckter Kniehebelanordnung,
- Fig. 5: eine vergrößerte Detaildarstellung der in Fig. 4 mit V bezeichneten Einzelheit,
- Fig. 6: eine alternative Ausführung entsprechend der in Fig. 4 mit V bezeichneten Einzelheit und
- Fig. 7.: eine weitere alternative Ausführung entsprechend der in Fig. 4 mit V bezeichneten Einzelheit
darstellt.

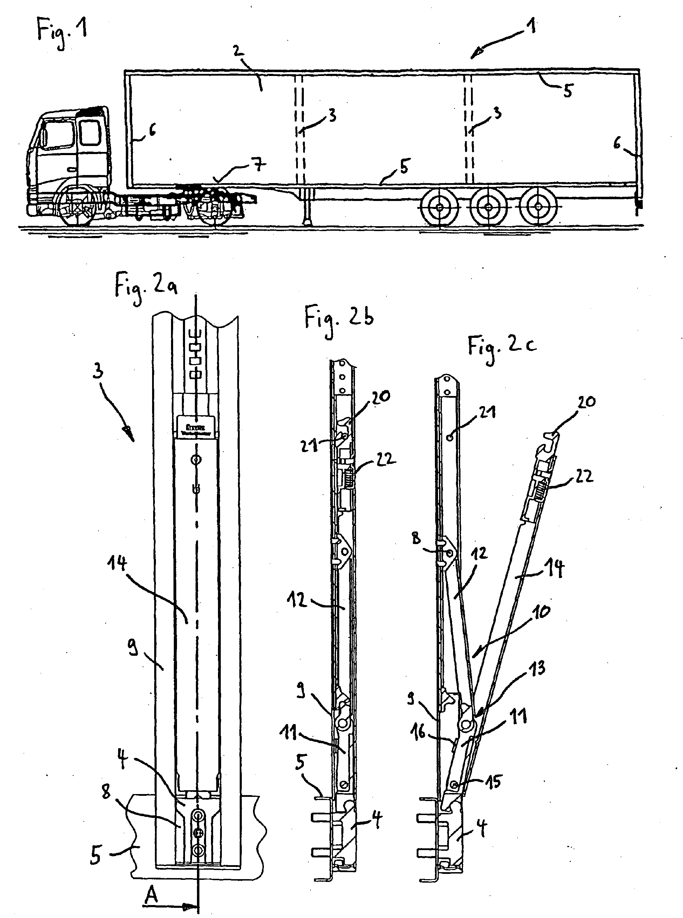

Bei dem in Fig. 1 beispielhaft dargestellten Fahrzeug 1 handelt es sich um einen Sattelzug mit einem Sattelauflieger, der mit einem über eine Plane geschlossenen Fahrzeugaufbau 2 versehen ist. In etwa in Höhe der Ladefläche 7 und weiter oben am Dach des Fahrzeugaufbaus 2 sind horizontale, sich in Fahrzeuglängsrichtung erstreckende Träger 5 angeordnet, wobei der obere Träger 5 am vorderen bzw. hinteren Ende des Fahrzeugaufbaus 2 über vertikale Pfosten 6 abgestützt ist. Zwischen den Pfosten 6 sind beim Ausführungsbeispiel zwei Rungen 3 angeordnet, die den unteren Träger 5 mit dem oberen Träger 5 verbinden und auf diese Weise Abstützungen für den oberen Träger 5 bilden. Um die Ladefläche 7 des Fahrzeugs 1 besser beladen zu können, sind die Rungen 3 an ihrem unteren Ende verriegelbar und am oberen Ende in Fahrzeuglängsrichtung verschiebbar gestaltet, um auf diese Weise ein Beladen der Ladefläche 7 von der Seite des Fahrzeugs 1 her, z.B. mit einem Gabelstapler, zu ermöglichen.

In den Fig. 2 a - c ist ein erstes Ausführungsbeispiel einer erfindungsgemäßen Runge 3 dargestellt. Fig. 2 a zeigt die Runge 3 in verriegelter Stellung von fahrzeugaußen her betrachtet. Die Runge 3 ist im Bereich ihres unteren Endes an einem Rungenhalter 4 lösbar verriegelt, der an dem unteren Träger 5 des Fahrzeugaufbaus 2 knapp unterhalb der Ladefläche 7 montiert ist. Einzelheiten der Verriegelung der Runge 3 an dem fahrzeugfesten Rungenhalter 4 lassen sich den Darstellungen der Fig. 2 b und c entnehmen, die die Runge 3 mit abgewinkelter bzw. gestreckter Kniehebelanordnung 10 in der in Fig. 2 a mit A bezeichneten Schnittebene zeigen.

In Fig. 2 c dargestellt ist die Runge 3 bei teilweise abgewinkelter Kniehebelanordnung 10. In dieser Stellung ist der erste Hebelarm 11 gegenüber dem zweiten Hebelarm 12 abgewinkelt, d. h. die Hebelarme schließen nach fahrzeugaußen hin einen Winkel von mehr als 180° ein. Die Hebelarme 11 und 12 sind über das Kniehebelgelenk 13 schwenkbeweglich miteinander verbunden. An seinem unteren Ende ist der erste Hebelarm 11 gegenüber dem Rungenhalter 4 druckfest abgestützt, wobei die Abstützung - wie beim Ausführungsbeispiel - unmittelbar, d.h. ohne irgendwelche Zwischenteile, oder auch mittelbar über Zwischenteile, wie z.B. Schieber, Abstützelemente usw. erfolgen kann. Das dem Kniehebelgelenk 13 abgewandte, obere Ende des zweiten Hebelarms 12 - und damit die Kniehebelanordnung 10 insgesamt - ist am Profil 9 der Runge 3 über die Achse B gelenkig aufgehängt.

Zum Verriegeln der Runge 3 an dem fahrzeugfesten Rungenhalter 4 wird die Kniehebelanordnung 10 aus der abgewinkelten Ausgangsstellung in eine gestreckte Verriegelungsstellung überführt, wobei die Runge 3 und mit dieser der Fahrzeugaufbau 2 angehoben wird. Um den zur Streckung der Kniehebelanordnung 10 erforderlichen Kraftaufwand gering zu halten, ist ein Betätigungshebel 14 vorgesehen, der den ersten Hebelarm 11 der Kniehebelanordnung 10 bis über das Kniehebelgelenk 13 hinaus nach oben hin verlängert und so aufgrund günstiger Hebelverhältnisse eine leichtgängige Betätigung der Kniehebelanordnung 10 erlaubt.

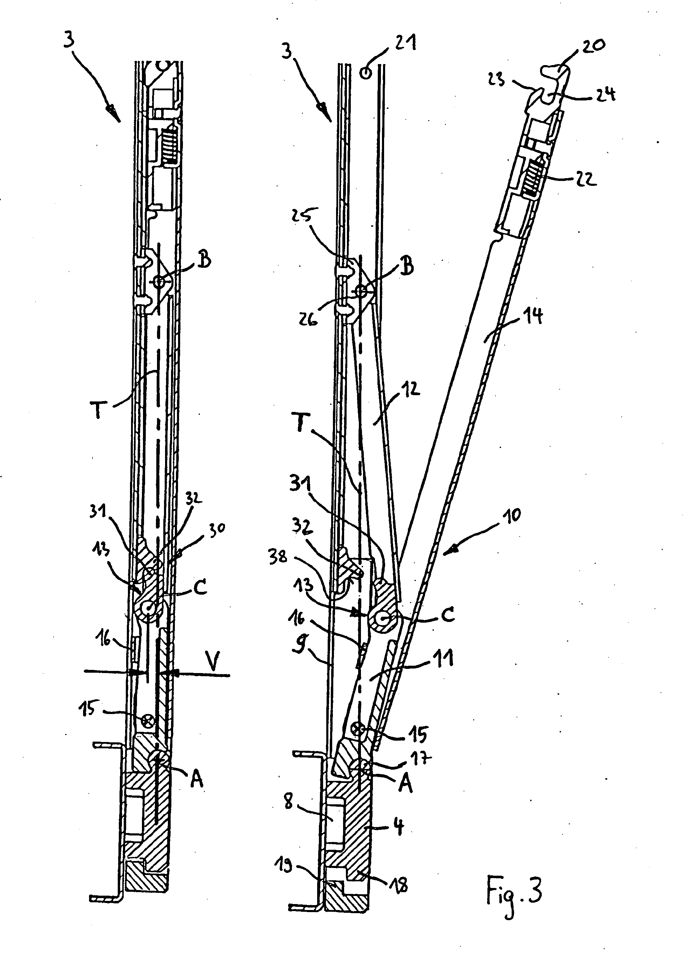

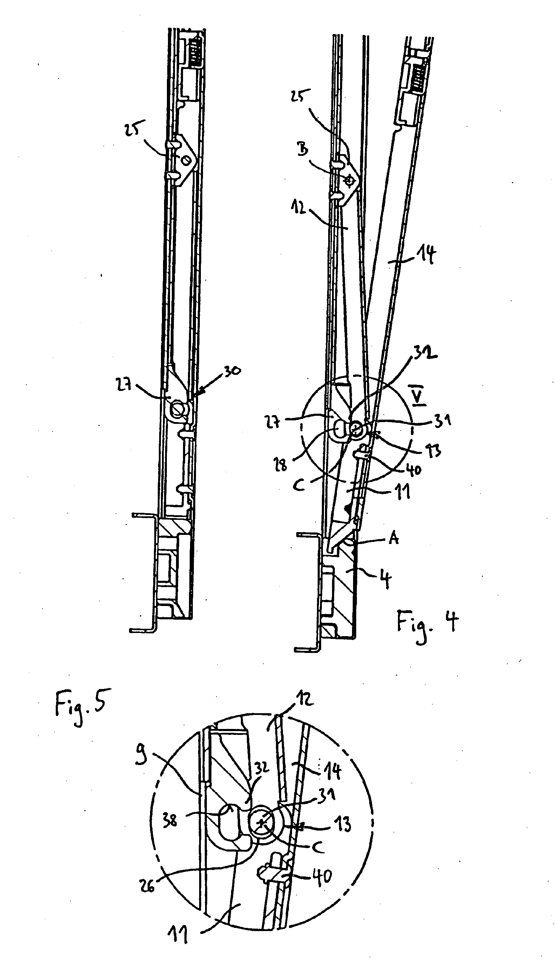

Bei dem in den Fig. 2 a - 2 c sowie in Fig. 3 dargestellten Ausführungsbeispiel ist der Hebelarm 11 mit einem separaten Betätigungshebel 14 versehen, der an einer an dem ersten Hebelarm 11 vorgesehenen Schwenkachse 15 an dem Hebelarm 11 angelenkt ist. Bei dieser Ausführung kann der Betätigungshebel 14 in einem gewissen Winkelbereich gegenüber dem Hebelarm 11 verschwenken, ohne die Winkelstellung der Hebelanordnung 10 zu verändern. Der Betätigungshebel 14 ist im Querschnitt U-förmig ausgeführt, wobei im Bereich des unteren Hebelarms 11 ein Schwenkbegrenzer 16 vorgesehen ist, der das U-Profil nach Art einer Brücke unterseitig schließt. Da der innerhalb des U-Profils angeordnete Hebelarm 11 schmaler ist, als der von dem Schwenkbegrenzer 16 und dem mittleren Schenkel des U-Profils eingeschlossene Zwischenraum, sind Relativbewegungen zwischen Betätigungshebel 14 und Hebelarm 11 in einem Schwenkbereich zwischen 1° bis 10° möglich, um auf diese Weise den Bedienkomfort beim Verriegeln der Runge 3 zu verbessern. Beispielsweise beim Lösen der Runge 3 kann das Betätigungselement 14 zunächst um 10° kraftfrei nach fahrzeugaußen geschwenkt werden, bevor dann der Schwenkbegrenzer 16 mit dem Hebelarm 11 nach Art eines Anschlags in Anlage gelangt und die Kniehebelanordnung 10 betätigt, d.h. eine Kraft auf den unteren Hebelarm 11 aufgebracht und dieser nach fahrzeugaußen mitgenommen wird. Im Gegensatz hierzu ist bei dem in Fig. 4 dargestellten Ausführungsbeispiel der Betätigungshebel 16 gegenüber dem ersten Hebelarm 11 nicht schwenkbeweglich, sondern über einen Niet 40 spielfrei montiert. Daneben ist es auch denkbar, den Hebelarm 11 einstückig zu einem Betätigungshebel 14 zu verlängern. Ferner ist es auch möglich, den Betätigungshebel 14 am oberen Hebelarm 12 vorzusehen. In diesem Fall erfolgt die Streckung, indem der Betätigungshebel 14 nach unten in Richtung auf den Rungenhalter 4 verschwenkt wird.

Die Verriegelung der Runge 3 am Rungenhalter 4 erfolgt über den Betätigungshebel 14 durch Strecken der Kniehebelanordnung 10, deren oberer Hebelarm 12 über eine Gelenkachse B an der Profilstange 9 der Runge 3 angelenkt ist. Wie sich insbesondere der Darstellung in Fig. 3 entnehmen lässt, stützt sich das untere Ende des ersten Hebelarms 11 unmittelbar von oben her gegen den Rungenhalter 4 ab, wozu dieser einen im Wesentlichen zylindrischen Vorsprung 17 aufweist, der ähnlich einem lösbaren Kugelgelenk in eine korrespondierende Öffnung am unteren Ende des Hebelarms 11 eingreift. Nachdem die Profilstange 9 mit einer in ihrem unterem Bereich vorgesehenen Öffnung 8 von fahrzeugaußen über den Rungenhalter 4 herüber geführt wird, wird die zylindrische Öffnung am unteren Ende des Hebelarms 11 auf den Vorsprung 17 des Rungenhalters 4 aufgesetzt. An der dem Vorsprung 17 gegenüberliegenden Unterseite des Rungenhalters 4 ist ein Vorsprung 18 zum Verriegeln der Runge 3 von unten her vorgesehen. Hierzu weist die Runge 3 an ihrem unteren Ende eine Verriegelungsstruktur 19 auf, die beim Anheben der Profilstange 9 hinter den Vorsprung 18 des Rungenhalters 4 greift und die Runge 3 so verriegelt. Beim Verriegeln muss die Runge 3 und mit dieser der Fahrzeugaufbau 2 in vertikaler Richtung so weit angehoben werden, dass das Formschlusselement 19 den Vorsprung 18 hintergreift, was kraftsparend über die Kniehebelanordnung 10 erfolgt. Durch Betätigung des Betätigungshebels 14 wird eine Betätigungskraft auf das Kniehebelgelenk 13 aufgebracht, so dass sich die Kniehebelanordnung 10 streckt, d.h. der Abstand zwischen der oberen Gelenkachse B des zweiten Hebelarms 12 und der unteren Schwenkachse A des ersten Hebelarms 11 vergrößert wird. Durch die Anlenkung des oberen Hebelarms 12 an dem Profil 9 der Runge 3 hebt sich die Profilstange 9 entsprechend der Streckung der Kniehebelanordnung 10, wobei sich das Kniehebelgelenk 13 von der Seite her der Profilstange 9 annähert und gleichzeitig die Elemente 18, 19 miteinander in Eingriff gelangen.

Die maximale Streckung der Kniehebelanordnung 10 ist erreicht, wenn die Achse A des unteren Hebelarms 11, die Achse B des oberen Hebelarms 12 und die Achse C des Kniehebelgelenks 13 in einer gemeinsamen Ebene liegen. In diesem Zustand schließen der erste Hebelarm 11 und der zweite Hebelarm 12 einen Winkel von in etwa 180° ein. Diese Stellung ist in Fig. 3 durch die strichliniert eingezeichnete Totpunktlage T gekennzeichnet. In der Totpunktlage T ist die Kniehebelanordnung 10 instabil, d.h. sie neigt dazu, entweder zur einen oder zur anderen Seite auszuschwenken.

Um insbesondere ein Rückschwenken der Kniehebelanordnung 10 in ihre abgewinkelte Ausgangsstellung zu vermeiden, ist die Kniehebelanordnung 10 so dimensioniert, dass die Achse C des Kniehebelgelenks 13 beim Verriegeln der Runge 3 bis über die von den Achsen A und B aufgespannte Ebene hinaus bewegt wird. Die Kniehebelanordnung 10 erfährt aufgrund der Überstreckung V bis über die Totpunktlage T hinaus eine sogenannte Übertotpunktsicherung. In dieser Stellung nimmt die Kniehebelanordnung 10 eine stabile Lage ein, in der die Hebelarme 11, 12 nach fahrzeugaußen hin betrachtet einen Winkel von weniger als 180° einschließen. In dieser Stellung neigt die Kniehebelanordnung 10 nicht dazu nach außen wegzuschwenken, wodurch sich eine betriebssichere Verriegelung der Runge 3 am Rungenhalter 4 ergibt.

Zusätzlich zur Übertotpunktsicherung ist das Kniehebelgelenk 13 über einen Formschluss 30 an der Profilstange 9 gegen Rückschwenken gesichert. Hierzu weist die Kniehebelanordnung 10 nahe dem Gelenk 13 ein Formschlusselement 31 auf, das mit einem am Profil 9 der Runge 3 vorgesehen Formschlusselement 32 in Eingriff bringbar ist. Das Formschlusselement 32 ist am Profil 9 der Runge 3 z.B. durch Schweißen befestigt und von insgesamt nasenförmigem Querschnitt. Das korrespondierende Formschlusselement 31 ist Teil des Kniehebelgelenks 13 und gemeinsam mit diesem verschwenkbar. Ab einem gewissen Streckwinkel der Kniehebelanordnung 10 gelangen die beiden Formschlusselemente 31, 32 miteinander in Anlage. Bis zu diesem Zeitpunkt führte die Betätigung des Betätigungshebels 14 über die beiden Hebelarme 11, 12 zu einem Anheben der Runge 3. Ab diesem Zeitpunkt, d.h. bei weiterer Betätigung, wird der zweite Hebelarm 12 kraftfrei und die zum weiteren Anheben der Runge 3 erforderliche Kraft über die Formschlusselemente 31, 32 auf das Profil 9 der Runge 3 übertragen, wozu ein beim Ausführungsbeispiel nach Art eines Langlochs gestaltetes Längenausgleichselement 26 (vgl.
Fig. 5) vorgesehen ist, was später noch näher zu erläutern ist. Beim Anheben der Runge 3 dringt das Formschlusselement 31 in die konkave Öffnung 38 des Formschlusselements 32 ein, bis der Vorsprung 31 formschlüssig in der konkaven Öffnung 38 des Formschlusselements 32 anliegt und auf diese Weise eine zusätzliche Rückschwenksicherung bildet.

Zum Anheben der Runge 3 über die Formschlusselemente 31, 32 ist der Abstand der Schwenkachse B des Hebelarms 12 gegenüber der Achse C des Kniehebelgelenks 13 veränderbar gehalten, was in den Ausführungsbeispielen über eine Langlochführung realisiert ist. Beim Ausführungsbeispiel gemäß Fig. 3 ist die Schwenkachse B durch einen an dem Hebelarm 12 festgelegten Bolzen gebildet, der nach Art eines Gelenkbolzens in einem das Gelenkauge bildenden Langloch 26 eines rungenfesten Drehlagers 25 aufgenommen ist. Das Langloch 26 ist ein Längenausgleichselement. Auf diese Weise kann die Profilstange 9 beim Eintreten des Formschlusselements 31 in die konkave Öffnung 38 des Formschlusselements 32 angehoben werden, wobei das Langloch 26 gemeinsam mit der Profilstange 9 über den Gelenkbolzen des Hebelarms 12 hinweg nach oben wandert, wodurch ein Längenausgleich geschaffen wird. Anschließend senkt sich die Profilstange 9 entsprechend der Geometrie der Öffnung 38 wieder ab, so dass ein sicherer Formschluss 30 zwischen den Formschlusselementen 31, 32 gebildet ist, der selbst bei kritischen Verhältnissen ein ungewolltes Rückschwenken der Kniehebelanordnung 10 aus der Übertotpunktlage blockiert.

Zur Verbesserung der Betriebssicherheit ist die Kniehebelanordnung 10 so dimensioniert, dass sich zusätzlich zu dem Formschluss 30 als weitere Rückschwenksicherung auch ein Kraftschluss ergibt, d. h. dass eine durch das Gewicht der Runge 3 bzw. des Fahrzeugaufbaus 2 resultierende Kraft über die Profilstange 9 und das Formschlusselement 32 auf das Formschlusselement 31 und damit die Kniehebelanordnung 10 übertragen wird. Auch diese Abstützkraft wirkt einem Rückschwenken der Kniehebelanordnung 10 entgegen.

Hinzu kommt, dass der obere Hebelarm 12 und dessen Gelenkachse B nach erfolgter Verriegelung der Runge 3 außerhalb der von der Runge 3 im Fahrbetrieb zu übertragenden Kräfte liegen. Insoweit reicht es aus, den oberen Hebelarm 12 nur für die beim Verriegeln zu übertragenden Kräfte auszulegen. Im Fahrbetrieb, d.h. bei gestreckter Kniehebelanordnung 10, braucht der Hebelarm 12 keine Kräfte zu übertragen und kann daher gegenüber dem ersten Hebelarm 11 schlanker gestaltet werden. Ein Ausfall des im Fahrbetrieb unbelasteten oberen Hebelarms 12 bleibt ohne Einfluss auf die Verriegelung der Runge 3, wodurch sich eine Kniehebelanordnung 10 mit wenig sicherheitsrelevanten Teilen ergibt, was ein ungewolltes Lösen der Kniehebelanordnung 10 bzw. der Runge 3 im Fahrbetrieb unwahrscheinlich macht. Auch hierdurch wird die Betriebssicherheit der Runge 3 verbessert.

Auch bei dem in Fig. 4 dargestellten Ausführungsbeispiel wird das Kniehebelgelenk 13 in der überstreckten Endstellung zusätzlich durch einen Formschluss 30 gesichert. Im Gegensatz zu der Darstellung in Fig. 3 stützt sich das Kniehebelgelenk 13 bei dieser Ausführung seitlich nicht direkt am Profil 9 der Runge 3 ab, sondern über einen Stützkörper 27. Dieser weist eine sich in Richtung des Fahrzeugaufbaus 2 erweiternde, pilzförmige Öffnung 28 auf, an deren Oberseite ein vorsprungartiges Formschlusselement 32 angeformt ist, vgl. Fig. 5. Die Formschlusssicherung 30 erfolgt gemeinsam mit dem bei diesem Ausführungsbeispiel als zweites Formschlusselement wirkenden Bolzen 31 des Kniehebelgelenks 13. Um wiederum auf baulich einfache Weise ein Eindringen des Formschlusselements 31 in den Bereich hinter dem Formschlusselement 32 bzw. die dort vorgesehene, konkave Öffnung 38 (vgl. Fig. 5) zu erlauben, ist eine Relativbeweglichkeit zwischen den Gelenkachsen B und C vorgesehen. Hierzu ist, wie sich der Darstellung in Fig. 5 entnehmen lässt, am unteren Ende des zweiten Hebelarms 12 ein dem Längenausgleich dienendes Langloch 26 im Bereich des Kniehebelgelenks 13 vorgesehen, in welchem der als Formschlusselement 31 dienende Gelenkbolzen in Richtung des Hebelarms 12 geführt ist. Aufgrund des Längenausgleichs kann sich das Formschlusselement 32 bei Kollision mit dem Formschlusselement 31 gemeinsam mit dem Profil 9 der Runge 3 gegenüber der Achse C anheben, bevor es sich dann beim Eintreten des Formschlusselements 31 in die hinterschnittene Öffnung 38 wieder auf das Formschlusselement 31 absenkt und so einen Formschluss 30 des Kniehebelgelenks 13 in dessen Endlage bewirkt. Zusätzlich lastet das Gewicht der Runge 3 bzw. des Fahrzeugaufbaus 2 über die Formschlusselemente 31, 32 auf dem Kniehebelgelenk 13. Der obere Hebelarm 12 übertragt im Fahrbetrieb keine Kräfte.

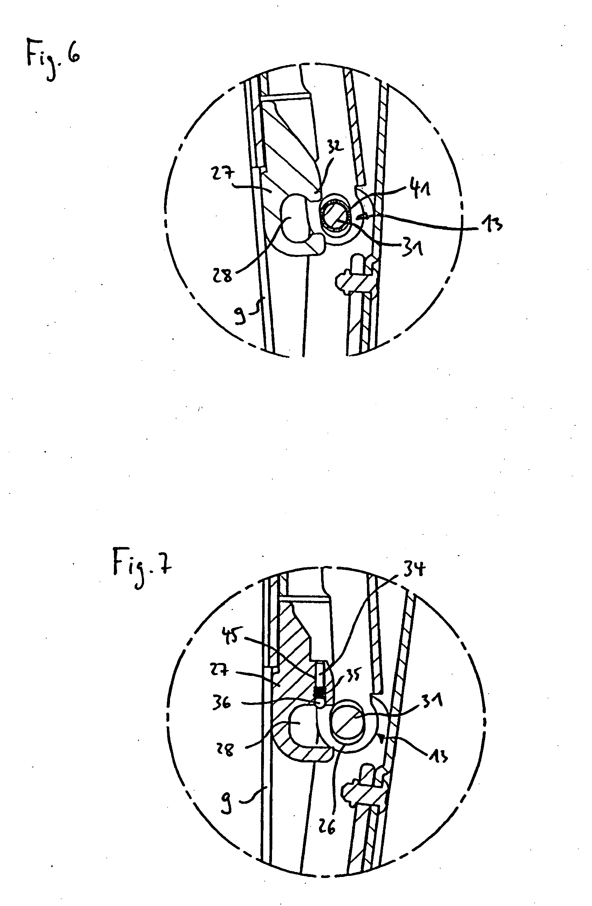

Weitere Ausführungen und Details zur formschlüssigen Sicherung der überstreckten Kniehebelanordnung 10 sind in den Fign. 6 und 7 dargestellt. Bei der in Fig. 6 dargestellten Ausführung ist das Formschlusselement 31 von einer Hülse 41 mit geringem Spiel umgeben. Die Hülse 41 kann sich beim Eindringen des Formschlusselements 31 in die hinterschnittene Öffnung 28 des Stützkörpers 27 um die ihre Achse drehen, wodurch beim Verriegeln der Runge 3 immer andere Flächenbereiche der Hülse 41 auf das Formschlusselement 32 treffen, so dass sich die Lebensdauer des Formschlusses 30, d.h. die Zahl der möglichen Verriegelungen, aufgrund verminderter Reibung erhöht.

Eine alternative Sicherung des Kniehebelgelenks 13 ist schließlich in Fig. 7 dargestellt. Die Öffnung 28 des Stützelements 27 ist mit geraden Schenkeln, d.h. ohne angeformte Formschlusselemente 32 gestaltet. In einer zu der Öffnung 28 quer verlaufenden Querbohrung 45 ist ein Sicherungsstift 34 vorgesehen. Dieser besteht im Wesentlichen aus einem über eine Feder 35 in Richtung der Öffnung 28 federbelasteten Kugelkopf 36. Beim Eintreten des Formschlusselements 31 in die Öffnung 28 wird der Kugelkopf 36 entgegen der Kraft der Feder 35 in Richtung der Profilstange 9 nach oben verschoben, wonach er anschließend wieder ausfedert und den Bolzen 31 in der Öffnung 28 sichert.

Zur weiteren Verbesserung der Betriebssicherheit ist nach Art einer zusätzlichen Redundanzstufe zusätzlich zu den zuvor beschriebenen Sicherheitsmaßnahmen im Bereich des Betätigungshebels 14 eine weitere Rückschwenksicherung in Form einer lösbaren Verriegelung vorgesehen, die nachfolgend im Einzelnen beschrieben wird.

Um ein Rückschwenken der Hebelanordnung 10 aus der überstreckten Endlage zu verhindern, ist als weitere Sicherungsstufe am oberen Ende des Betätigungshebels 14 ein mit der Runge 3 verriegelbares Rastelement 20 vorgesehen. Einzelheiten des Rastelements 20 lassen sich insbesondere der Darstellung in Fig. 3 entnehmen. Bei dem Rastelement 20 handelt es sich um eine Klinke, die entgegen der Kraft einer Feder 22 in Längsrichtung des Betätigungshebels 14 bewegbar ist. Die Verriegelung des Rastelements 20 an der Runge 3 erfolgt gegenüber einer bolzenförmigen Gegenrast 21, die sich von einer Seite des Profils 9 zur gegenüberliegenden erstreckt.

Die Verriegelung des Rastelements 20 an der Gegenrast 21 des Betätigungshebels 14 in Richtung der Profilstange 9 erfolgt selbsttätig. Sobald das Rastelement 20 mit einer an diesem vorgesehenen Anschrägung 23 am zylindrischen Umfang der Gegenrast 21 angreift, ergibt sich eine Kraftkomponente in Längsrichtung des Betätigungshebels 14, die die Druckfeder 22 staucht und das Rastelement 20 in Richtung des Betätigungshebels 14 nach unten bewegt. Sobald die Gegenrast 21 die Schräge 23 des Rastelements 20 überwunden hat, entfällt die Stauchkraft und das Rastelement 20 federt in die obere Endstellung zurück, wobei die Gegenrast 21 in eine hakenförmige Öffnung 24 des Rastelements 20 eintritt. Es ergibt sich ein Formschluss zwischen der hakenförmigen Öffnung 24 und der zylindrischen Gegenrast 21, die nur entgegen der Kraft der Feder 22 wieder lösbar ist. Selbst bei starker Biegung der Runge 3 bzw. der Profilstange 9, z.B. infolge von Straßenunebenheiten, bleibt dieser Formschluss zuverlässig bestehen, so dass ein Rückschwenken der an der Innenseite des im Querschnitt U-förmigen Betätigungshebels 14 anliegenden Kniehebelanordnung 10 sicher blockiert ist.

Das mit der Runge 3 verriegelbare Rastelement 20 am Ende des Betätigungshebels 14 erhöht damit die Betriebssicherheit der Runge 3. Für den Fall, dass der obere Hebelarm 12 zu einem Betätigungshebel 14 verlängert ist, kann das Rastelement 20 an dessen unterem Ende vorgesehen werden und mit einer korrespondierenden Gegenrast 21 am Rungenhalter 4 oder am unteren Ende der Runge 3 verriegelt werden.

Beim Ausführungsbeispiel wird die Betriebssicherheit deutlich erhöht. Es ergibt sich eine dreifache Sicherung bestehend aus der Übertotpunktsicherung, der Formschlusssicherung des Kniehebelgelenks und der Verriegelung des Betätigungshebels. Da der zweite Hebelarm nicht den dynamischen Kräften im Fahrbetrieb ausgesetzt ist, erhöht sich die Betriebssicherheit der Runge weiter.

### Bezugszeichen:

- 1: Fahrzeug
- 2: Fahrzeugaufbau
- 3: Runge
- 4: Rungenhalter
- 5: Träger, Profil
- 6: Pfosten
- 7: Ladefläche
- 8: Öffnung
- 9: Profilstange, Profil
- 10: Kniehebelanordnung
- 11: Hebelarm
- 12: Hebelarm
- 13: Kniehebelgelenk
- 14: Betätigungshebel
- 15: Schwenkachse
- 16: Schwenkbegrenzer
- 17: Vorsprung
- 18: Vorsprung
- 19: Verriegelungsstruktur
- 20: Rastelement
- 21: Gegenrast
- 22: Feder
- 23: Anschrägung
- 24: Öffnung
- 25: Drehlager
- 26: Längenausgleichselement, Langloch
- 27: Stützkörper
- 28: Öffnung
- 30: Formschluss
- 31: Formschlusselement
- 32: Formschlusselement
- 34: Sicherungsstift
- 35: Feder
- 36: Kugelkopf
- 38: Öffnung
- 40: Niet
- 41: Hülse
- 45: Querbohrung

- A: Achse
- B: Achse
- C: Achse
- V: Überstreckung
- T: Totpunktlage

## Patentansprüche

1. Runge für Fahrzeugaufbauten (2) mit einer zum Festlegen der Runge (3) an einem fahrzeugfesten Rungenhalter (4) streckbaren Kniehebelanordnung (10), die sich zusammensetzt aus einem ersten Hebelarm (11), der schwenkbeweglich gegen den Rungenhalter (4) abgestützt ist, und einem zweiten Hebelarm (12), der über ein Kniehebelgelenk (13) mit dem ersten Hebelarm (11) verbunden ist und über eine Gelenkachse (B) an einer vertikalen Profilstange (9) der Runge (3) angelenkt ist,
**dadurch gekennzeichnet,**
**dass** das Kniehebelgelenk (13) der gestreckten Kniehebelanordnung (10) über einen Formschluss (30) an der Profilstange (9) gegen Rückschwenken gesichert ist.

2. Runge nach Anspruch 1, **dadurch gekennzeichnet, dass** sich die Profilstange (9) von oben her gegen das Kniehebelgelenk (13) der gestreckten Kniehebelanordnung (10) abstützt, wobei der zweite Hebelarm (12) keine Abstützkräfte überträgt.

3. Runge nach Anspruch 1 und/oder Anspruch 2, **dadurch gekennzeichnet, dass** zur Bildung des Formschlusses (30) ein gemeinsam mit dem Kniehebelgelenk (13) verschwenkbares Formschlusselement (31) der Kniehebelanordnung (10) mit einem an der Profilstange (9) angeordneten Formschlusselement (32) in Eingriff bringbar ist.

4. Runge nach Anspruch 3, **dadurch gekennzeichnet, dass** das verschwenkbare Formschlusselement (31) eine drehbar gelagerte Hülse (41) ist.

5. Runge nach einem der vorhergehenden Ansprüche, **dadurch gekennzeichnet, dass** der Formschluss (30) von einem das Kniehebelgelenk (13) hintergreifenden Sicherungsstift (34) gebildet wird.

6. Runge nach einem der vorhergehenden Ansprüche, **gekennzeichnet durch** ein Längenausgleichselement (26), über das der Abstand der Gelenkachse (B) gegenüber der Achse (C) des Kniehebelgelenks (13) veränderbar ist.

7. Runge nach Anspruch 6, **dadurch gekennzeichnet, dass** das Längenausgleichselement (26) ein Langloch im Bereich der Gelenkachse (B) und/oder der Achse (C) des Kniehebelgelenks (13) ist.

8. Runge nach einem der vorhergehenden Ansprüche, **dadurch gekennzeichnet, dass** ein Hebelarm (11, 12) mit einem Betätigungshebel (14) zum Strecken der Kniehebelanordnung versehen ist, der den Hebelarm (11, 12) über das Kniehebelgelenk (13) hinaus verlängert, wobei der Betätigungshebel (14) zur Sicherung der gestreckten Kniehebelanordnung (10) mit einem Rastelement (20) an der Runge (3) oder dem Rungenhalter (4) verriegelbar ist.

9. Runge nach Anspruch 8, **dadurch gekennzeichnet, dass** der erste Hebelarm (11) mit dem Betätigungshebel (14) versehen ist.

10. Runge nach einem der Ansprüche 8 und/oder 9, **dadurch gekennzeichnet, dass** das Rastelement (20) entgegen der Kraft einer Feder (22) in Längsrichtung des Betätigungshebels (14) beweglich ist.

11. Runge nach einem der vorhergehenden Ansprüche, **dadurch gekennzeichnet, dass** die gestreckte Kniehebelanordnung (10) eine Überstreckung (V) aufweist.

## Claims

1. Stanchion for vehicle superstructures (2), comprising a knee lever arrangement (10) which can be straightened in order to fix the stanchion (3) to a stanchion holder (4) which is fixed to the vehicle, said knee lever arrangement being composed of a first lever arm (11) which is supported against the stanchion holder (4) in a pivotable manner, and a second lever arm (12) which is connected to the first lever arm (11) via a knee lever joint (13) and which is articulated on a vertical profile rod (9) of the stanchion (3) via an articulation axis (B), **characterised in that** the knee lever joint (13) of the straightened knee lever arrangement (10) is secured against pivoting back via a form fit (30) on the profile rod (9).

2. Stanchion according to claim 1, **characterised in that** the profile rod (9) is supported from above against the knee lever joint (13) of the straightened knee lever arrangement (10), wherein the second lever arm (12) transmits no supporting forces.

3. Stanchion according to claim 1 and/or claim 2, **characterised in that**, in order to form the form fit (30), a form-fitting element (31) of the knee lever arrangement (10) which can pivot together with the knee lever joint (13) can be brought into engagement with a form-fitting element (32) arranged on the profile rod (9).

4. Stanchion according to claim 3, **characterised in that** the pivotable form-fitting element (31) is a rotatably mounted sleeve (41).

5. Stanchion according to one of the preceding claims, **characterised in that** the form fit (30) is formed by a securing pin (34) which engages behind the knee lever joint (13).

6. Stanchion according to one of the preceding claims, **characterised by** a length compensation element (26), via which the distance of the articulation axis (B) from the axis (C) of the knee lever joint (13) can be varied.

7. Stanchion according to claim 6, **characterised in that** the length compensation element (26) is an elongate hole in the region of the articulation axis (B) and/or the axis (C) of the knee lever joint (13).

8. Stanchion according to one of the preceding claims, **characterised in that** one lever arm (11, 12) is provided with an actuating lever (14) for straightening the knee lever arrangement, which extends the lever arm (11, 12) beyond the knee lever joint (13), wherein the actuating lever (14) can be locked by means of a latching element (20) on the stanchion (3) or on the stanchion holder (4) in order to secure the straightened knee lever arrangement (10).

9. Stanchion according to claim 8, **characterised in that** the first lever arm (11) is provided with the actuating lever (14).

10. Stanchion according to one of claims 8 and/or 9, **characterised in that** the latching element (20) can be moved counter to the force of a spring (22) in the longitudinal direction of the actuating lever (14).

11. Stanchion according to one of the preceding claims, **characterised in that** the straightened knee lever arrangement (10) exhibits an overstraightening (V).

## Revendications

1. Rancher pour carrosseries de véhicule (2) avec un ensemble de leviers à genouillère (10) pouvant s'étirer pour fixer le rancher (3) sur un support de rancher (4) fixé au véhicule, qui se compose d'un premier bras de levier (11) qui est en appui à pivotement contre le support de rancher (4), et un second bras de levier (12) qui est relié par une articulation à genouillère (13) au premier bras de levier (11) et est articulé par le biais d'un axe d'articulation (B) sur une barre profilée (9) verticale du rancher (3), **caractérisé en ce que** l'articulation à genouillère (13) de l'ensemble de leviers à genouillère (10) étiré est bloquée contre tout pivotement en arrière par le biais d'une liaison positive sur la barre profilée (9).

2. Rancher selon la revendication 1, **caractérisé en ce que** la barre profilée (9) est en appui par le dessus contre l'articulation à genouillère (13) de l'ensemble de leviers à genouillère (10) étiré, le second bras de levier (12) ne transmettant aucune force d'appui.

3. Rancher selon la revendication 1 et/ou 2, **caractérisé en ce que** pour la formation de la liaison positive (30), un élément positif pivotant conjointement avec l'articulation à genouillère (13) de l'ensemble de leviers à genouillère (10) peut être amené en engagement avec un élément positif (32) disposé sur la barre profilée (9).

4. Rancher selon la revendication 3, **caractérisé en ce que** l'élément positif (31) pivotant est une douille (41) montée à rotation.

5. Rancher selon l'une quelconque des revendications précédentes, **caractérisé en ce que** la liaison positive (30) est formée par une goupille de sécurité (34) venant en prise derrière l'articulation à genouillère (13).

6. Rancher selon l'une quelconque des revendications précédentes, **caractérisé par** un élément de compensation longitudinale (26), par le biais duquel la distance entre l'axe d'articulation (B) et l'axe (C) de l'articulation à genouillère (13) peut être modifiée.

7. Rancher selon la revendication 6, **caractérisé en ce que** l'élément de compensation longitudinale (26) est un trou oblong dans la zone de l'axe d'articulation (B) et/ou de l'axe (C) de l'articulation à genouillère (13).

8. Rancher selon l'une quelconque des revendications précédentes, **caractérisé en ce qu'**un bras de levier (11, 12) est pourvu d'un levier d'actionnement (14) pour l'étirement de l'ensemble de leviers à genouillère, qui prolonge le bras de levier (11, 12) au-delà de l'articulation à genouillère (13), le levier d'actionnement (14) pouvant être verrouillé pour le blocage de l'ensemble de leviers à genouillère (10) étiré avec un élément d'encliquetage (20) sur le rancher (3) ou le support de rancher (4).

9. Rancher selon la revendication 8, **caractérisé en ce que** le premier bras de levier (11) est pourvu du levier d'actionnement (14).

10. Rancher selon l'une quelconque des revendications 8 et/ou 9, **caractérisé en ce que** l'élément d'encliquetage (20) est mobile contre la force d'un ressort (22) dans le sens longitudinal du levier d'actionnement (14).

11. Rancher selon l'une quelconque des revendications précédentes, **caractérisé en ce que** l'ensemble de leviers à genouillère (10) étiré présente un étirement excessif (V).
